# EUROPEAN PATENT SPECIFICATION

(11) **EP 3 397 464 B1**
(45) Date of publication and mention of the grant of the patent: **05.04.2023**
(21) Application number: 16805577.0
(22) Date of filing: 03.11.2016
(51) Int. Cl.: B29D 30/02, B60C 7/14, B60C 7/24, B60B 9/26, B60B 3/00, B29C 65/08, B60B 9/02, B60B 9/04, B60B 9/10, B29D 30/26

(54) **METHOD OF FORMING NON-PNEUMATIC TIRE USING INTERMEDIATE SECTION**
VERFAHREN ZUR HERSTELLUNG EINES NICHTPNEUMATISCHEN REIFENS UNTER VERWENDUNG EINES ZWISCHENABSCHNITTS
PROCÉDÉ DE FORMATION D'UN PNEU NON PNEUMATIQUE UTILISANT UNE SECTION INTERMÉDIAIRE

(30) Priority: 28.12.2015 WO PCT/US2015/067628
(43) Date of publication of application: 07.11.2018
(73) Proprietor: Compagnie Générale des Etablissements Michelin, 63000 Clermont-Ferrand (FR)
(72) Inventor: WILSON, Brian, Greenville, SC 29605 (US); RIVERS, Eric, Greenville, SC 29605 (US); BOHN, Jr., Clayton, Greenville, SC 29605 (US)
(74) Representative: Casalonga
(86) International application number: PCT/US2016/060291
(87) International publication number: WO 2017/116556

(56) References cited:
- EP-A1- 2 910 387
- WO-A1-2005/039865
- JP-A- 2012 091 555
- JP-A- 2012 121 559
- NL-C- 2 002 955
- US-A- 5 685 926
- US-A1- 2008 314 486
- US-A1- 2011 248 554
- US-A1- 2015 251 493

## Description

### FIELD OF THE INVENTION

The present invention relates generally to a method of constructing a non-pneumatic tire from a series of subsections. More particularly, the present application involves a method of constructing a non-pneumatic tire with multiple shear band layers and at least one intermediate section.

### BACKGROUND

For example from EP 2910 387 A1 or US 2008/314486 A1 non-pneumatic tires for vehicles and other applications are known that may include a hub surrounded circumferentially by an outward radially disposed tread that includes an annular shear band ring. A supporting structure that may have a series of spokes can be disposed radially between the hub and shear band ring and can function to connect these two components. As the tire rotates under load, the spokes experience bending, extension and compression deformation when they are located downward near the contact patch of the tire. The spokes straighten outside the contact patch relieving the bending and compression deformation.

The formation of the non-pneumatic tire may involve the insertion of the shear band ring into a mold and then overmolding the supporting structure onto the interior of the shear band ring through injection molding. However, this will generate a large amount of pressure onto the shear band ring causing distortion and damage thereto. Further, injection molding of the supporting structure across the entire axial length of the non-pneumatic tire may be difficult in that material will not easily flow along the entire axial length during this process. Further, thin mold sections between features of the supporting structure, such as spokes, may be damaged by pressure variations in the manufacturing process.

Another method of formation involves the formation of the supporting structure and then subsequent attachment to the shear band ring. Attachment through adhesives requires precise control of critical parameters such as temperature, humidity, coating thickness, application pressure, and clamping time. Further, such attachment requires very precise and expensive fixtures to properly locate features of the supporting structure, such as spokes, with respect to the shear band ring. Still further, the use of adhesives in the manufacturing process may cause fouling of the tooling and equipment by the adhesive itself. As such, there remains room for variation and improvement within the art.

### BRIEF DESCRIPTION OF THE DRAWINGS

A full and enabling disclosure of the present invention, including the best mode thereof, directed to one of ordinary skill in the art, is set forth more particularly in the remainder of the specification, which makes reference to the appended Figs. in which:
Fig. 1 is a perspective view of a non-pneumatic tire.
Fig. 2 is a perspective exploded assembly view of a non-pneumatic tire composed of a hub and a series of intermediate sections inserted into an outer shear band ring.
Fig. 3 is a perspective view of an outer shear band ring.
Fig. 4 is a perspective view of a series of inner shear band rings.
Fig. 5 is a side elevation view of an intermediate section formed by molding a supporting structure into an inner shear band ring.
Fig. 6 is a side elevation view of an intermediate section assembled into an outer shear band ring.
Fig. 7 is a front view of a non-pneumatic tire made of a series of intermediate sections inserted into an outer shear band ring.
Fig. 8 is a side elevation view of a non-pneumatic tire with a hub assembled into the inner V pair spoke section of the intermediate section.
Fig. 9 is a partial perspective cross-sectional view of a non-pneumatic tire with the outer shear band ring disassembled from the inner shear band ring.

Repeat use of reference characters in the present specification and drawings is intended to represent the same or analogous features or elements of the invention.

### DETAILED DESCRIPTION OF REPRESENTATIVE EMBODIMENTS

Reference will now be made in detail to embodiments of the invention, one or more examples of which are illustrated in the drawings. Each example is provided by way of explanation of the invention, and not meant as a limitation of the invention. For example, features illustrated or described as part of one embodiment can be used with another embodiment to yield still a third embodiment. It is intended that the present invention include these and other modifications and variations.

It is to be understood that the ranges mentioned herein include all ranges located within the prescribed range. As such, all ranges mentioned herein include all sub-ranges included in the mentioned ranges. For instance, a range from 100-200 also includes ranges from 110-150, 170-190, and 153-162. Further, all limits mentioned herein include all other limits included in the mentioned limits. For instance, a limit of up to 7 also includes a limit of up to 5, up to 3, and up to 4.5.

The present invention provides for a method of forming a non-pneumatic tire 10 that includes a hub 20, a supporting structure 16, and a shear band ring 56 according to independent claim 1. The method involves the construction of a plurality of intermediate sections 14 that each have an inner shear band ring 18. These intermediate sections 14 may be assembled into an outer shear band ring 12, and a hub 20 may be subsequently attached to complete the assembly. The intermediate sections 14 may be made up of a supporting structure 16 that includes an inner V pair spoke section 40, an interface ring 42, and an outer V pair spoke section 44.

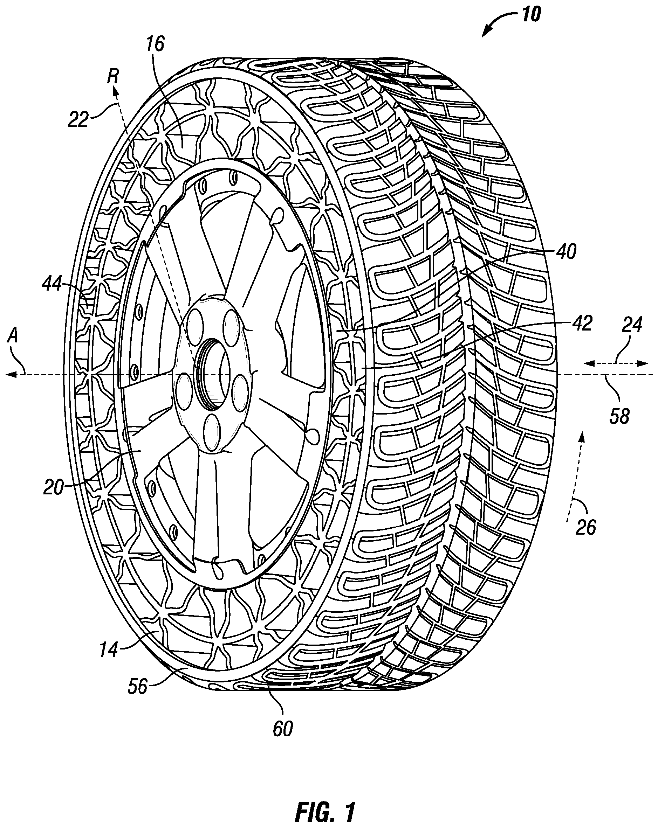

With reference to Fig. 1, a non-pneumatic tire 10 is shown through which a central axis 58 extends. The central axis 58 is identified with other components of the non-pneumatic tire 10 and relates to the position of these components once assembled into the non-pneumatic tire 10. An axial direction 24 is defined as the direction along the central axis 58 or the direction parallel to the central axis 58. The radial direction 22 of the non-pneumatic tire 10 extends at a 90 degree angle to the axial direction 24, and the circumferential direction 26 extends around the arc length of the non-pneumatic tire 10 so as to circle 360 degrees the central axis 58. As with the axial direction 24, the radial direction 22 and the circumferential direction 26 are identified with other components in the drawings that are then subsequently assembled into the non-pneumatic tire 10 as their orientations would be upon assembly. The non-pneumatic tire 10 includes a hub 20 that can be mounted onto a wheel of the vehicle. The central axis 58 extends through the center of the hub 20.

Located outward from the hub 20 in the radial direction 22 is a supporting structure 16. The supporting structure 16 may be designed in a variety of manners. As shown, the supporting structure 16 includes an inner V pair spoke section 40, an interface ring 42, and an outer V pair spoke section 44. The spokes are V shaped with apexes that are oriented to and are located at one another between the inner and outer V pair spoke sections 40 and 44. However, it is to be understood that the supporting structure 16 can be provided in a variety of manners and need not include V shaped spokes, and need not include an inner and outer section in other embodiments. Instead, the supporting structure 16 may include simply a plurality of spokes that are linear in shape and that are arranged completely around the supporting structure 16 in the circumferential direction 26. As such, it is to be understood that the configuration of the supporting structure 16 illustrated and described is only exemplary and that other arrangements are possible in other configurations of the non-pneumatic tire 10 and method disclosed herein.

The non-pneumatic tire 10 also has a shear band ring 56 that engages the supporting structure 16 and is located radially outward from the supporting structure 16 in the radial direction 22. Tread 60 is also included in the non-pneumatic tire 10 and is attached to the shear band ring 56. The supporting structure 16 may be formed as a single component, or can be made by individually constructing two or three subcomponents and then assembling these two or three modular pieces together to form the supporting structure 16. Construction in two or three modular pieces may allow for benefits in cost and performance to be realized.

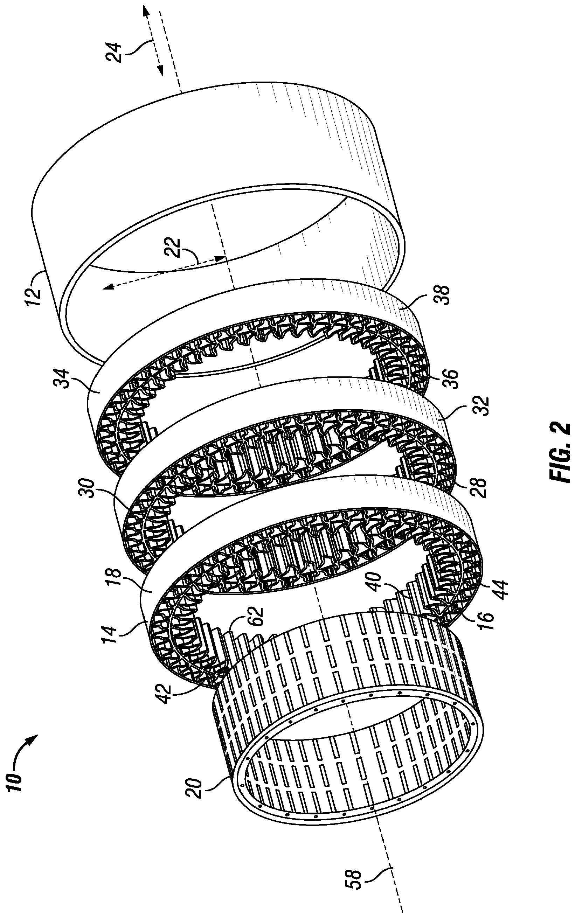

An exploded perspective view of a non-pneumatic tire 10 is shown in Fig. 2. The tire 10 includes a plurality of intermediate sections 14, 28 and 34 that can all be formed in the same manner with the same components. The intermediate sections include supporting structures 16, 30 and 36 that are located inward in the radial direction 22 from corresponding inner shear band rings 18, 32 and 38. The intermediate sections 14, 28 and 34 are positioned into an outer shear band ring 12 so as to lie against one another in the axial direction 24. The shear band ring 56 is thus made up of an outer shear band ring 12 and a number of inner shear band rings 18, 32 and 38 and is not formed as a single component. The various spokes of the supporting structures 16, 30, and 36 do not directly engage the outer shear band ring 12 but are instead offset therefrom by the inner shear band rings 18, 32 and 38. A hub 20 is located within and is attached to the intermediate sections 14, 28 and 34.

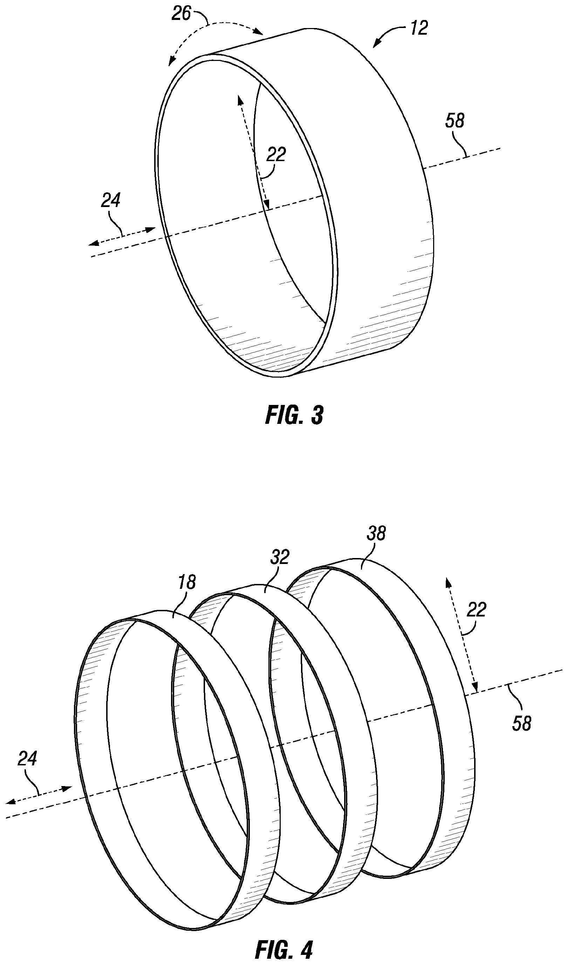

The method for forming the non-pneumatic tire 10 may first involve the building and curing of the outer shear band ring 12 and the inner shear band rings 18, 32 and 38. The outer shear band ring 12 is shown in Fig. 3, and three inner shear band rings 18, 32 and 38 are shown in Fig. 4. The number of inner shear band rings 18, 32 and 38 may vary depending upon the width of the outer shear band ring 12 which is the length of the outer shear band ring 12 in the axial direction 24. Any number of inner shear band rings 18, 32 and 38 may be utilized and they may or may not be sized the same in the axial direction 24. The number and size of the inner shear band rings 18, 32 and 38 may be dependent upon molding constraints of other features of the non-pneumatic tire 10 such as the spokes. The outer shear band ring 12 may include any number of layers of the resulting shear band ring 56. Likewise, the inner shear band rings 18, 32 and 38 can include any number of layers of the resulting shear band ring 56. In some embodiments, the inner shear band rings 18, 32 and 38 include two layers of the shear band ring 56. The inner shear band rings 18, 32 and 38 are portions of the shear band ring 56 and are not portions of the spokes and are not rings of the supporting structures, 16, 30 and 36 in that they can include the same materials as other portions of the shear band ring 56 such as the outer shear band ring 12. The number of layers and the thickness in the radial direction 22 of the inner shear band rings 18, 32 and 38 can be selected so that the inner shear band rings 18, 32 and 38 can be arranged in such as way so that they can be inserted into the outer shear band ring 12 when the intermediate sections 14, 28 and 34 are inserted.

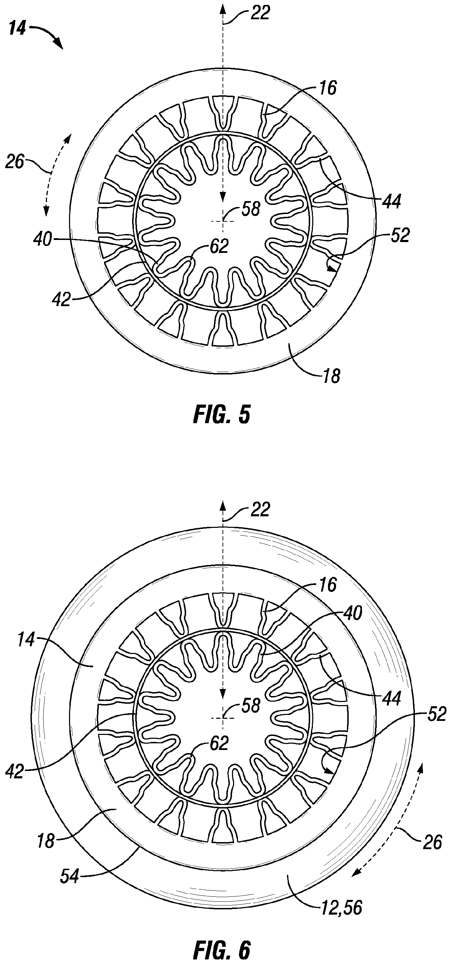

The next step in the assembly process may be the formation of the intermediate section 14. Once the inner shear band ring 18 is formed, it may be placed as an insert within a mold for the formation of the supporting structure 16. The mold into which the inner shear band ring 18 may be placed can be an injection mold. With reference to Fig. 5, the supporting structure 16 may include an inner V pair spoke section 40, an interface ring 42, and an outer V pair spoke section 44. These sections 40, 42 and 44 can be injection molded and upon their formation by injection molding the outer V pair spoke section 44 can bond directly to the inner surface 52 of the inner shear band ring 18. This type of process is known as overmolding in the injection molding process. The mold that includes the components of the supporting structure 16 such as the inner V pair spoke section 40, interface ring 42, and the outer V pair spoke section 44 may control the precision of location of the attachment of the spokes of the outer V pair spoke section 44 to the inner shear band ring 18 and may eliminate the challenges associated with attaching the spokes to the shearband 56. Such an attachment also minimizes the amount of material needed for attachment of the spokes to the shearband 56. Although described as using injection molding, any type of molding may be used to create/attach components of the non-pneumatic tire 10 such as the inner shear band ring 18, the supporting structure 16, or the inner shear band ring 18

The inner surface 52 of the inner shear band ring 18 may be prepared by a plasma treatment or a chemical treatment. The inner surface 52 may be primed by being chemically prepared either by plasma or chemical adhesion promoter. This priming may be done before the injection molding in order to help the outer V pair spoke section 44 better adhere to the inner surface 52 of the inner shear band ring 18. Alternatively, the inner shear band ring 18 may be primed by the application of cushion gum instead of the use of plasma or chemical adhesion treatment. The cushion gum can have a chemistry tailored for adhesion with the particular outer V pair spoke section 44 material or compound being used.

The components of the supporting structure 16 such as the inner V pair spoke section 40, interface ring 42, and outer V pair spoke section 44 can be made out of thermoplastic elastomers such as thermoplastic urethanes, polyether block amides, copolyester ethers, polyolefin elastomers, and plastomers. In some embodiments, other materials may be used to construct the inner V pair spoke section 40, interface ring 42, and outer V pair spoke section 44 could be more rigid thermoplastic materials such as polyethylene, polypropylene, and nylon. In some embodiments, the supporting structure 16 and the other described components may be made out of a polymeric material such as polyurethane, copolyester, polyether block amide, or polyolefins.

The second intermediate section 28 may be constructed in a similar manner as the first intermediate section 14 as previously discussed. In this regard, the components of the second supporting structure 30 such as the outer V pair spoke section of the second supporting structure 30 may be molded onto the inner surface of the second inner shear band ring 32 through an overmolding in the injection molding process. The third intermediate section 34 may likewise be constructed as in a similar manner as the first intermediate section 14 previously discussed. Components of the third supporting structure 36 such as the outer V pair spoke section can be molded onto the inner surface of the third inner shear band ring 38. The inner surfaces of the second and third inner shear band rings 32 and 38 may be prepped in the same manners as the inner surface 52, and the materials making up the second and third intermediate sections 28 and 34 may be the same as the intermediate section 14 as previously discussed and a repeat of this information is not necessary. If additional intermediate sections are needed in other embodiments, they may be provided as previously discussed with respect to the first intermediate section 14.

The next step in the assembly process after the construction of the number of intermediate sections 14, 28 and 34 needed is the attachment of the intermediate sections 14, 28 and 34 into the outer shear band ring 12. An adhesive interface 54 may be formed for the attachment of the intermediate sections 14, 28 and 34 to the outer shear band ring 12. The adhesive interface 54 may be a rubber based crosslinking material such as cushion gum that can be applied in a solid/skim or liquid form. Other adhesives used to form the adhesive interface 54 could be polyurethane, cyanoacrylate, or epoxy based glue. The adhesive forming the adhesive interface 54 may be applied to either the inner surface of the outer shear band ring 12, the outer surface of the various inner shear band rings 18, 32 and 38, or to both the outer shear band ring 12 and the inner shear band rings 18, 32 and 38.

Once the adhesive is applied, the intermediate section 14 may be collapsed some amount in the radial direction 22. The collapsing may be into any type of shape. This collapsing allows the intermediate section 14 to be inserted into the interior of the outer shear band ring 12 as the exterior diameter of the intermediate section 14 will be less than the inner diameter of the outer shear band ring 12. Once inserted, the intermediate section 14 will be allowed to return to its prior state so that the outer surface of the intermediate section 14 engages the interior surface of the outer shear band ring 12. Insertion of the intermediate section 14 into the outer shear band ring 12 is shown in Fig. 6 in which the position of the intermediate section 14 relative to the outer shear band ring 12 is shown.

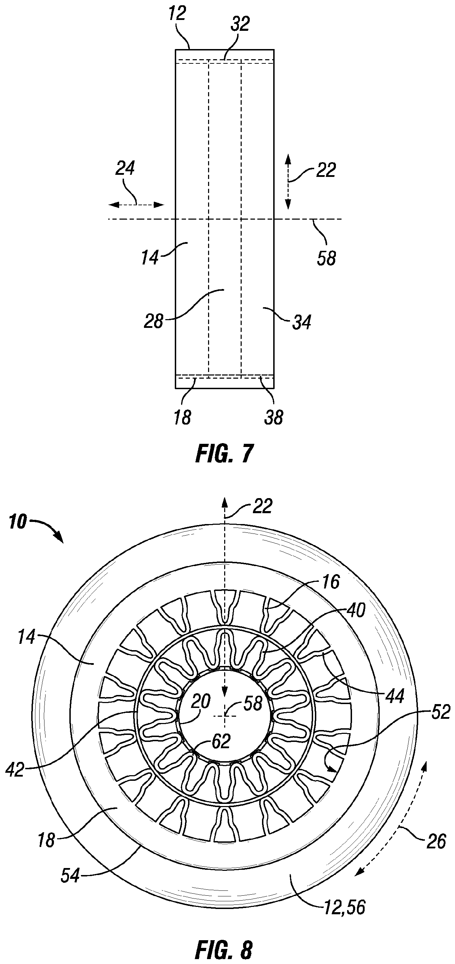

The second and third intermediate sections 28 and 34 can likewise be collapsed, inserted, and expanded into the outer shear band ring 12. Fig. 7 shows the positioning of the second and third intermediate sections 28 and 34 into the outer shear band ring 12. The second intermediate section 28 engages both the first intermediate section 14 and the third intermediate section 34, and the first and third intermediate sections 14 and 34 are located at the axial ends of the outer shear band ring 12. The three intermediate sections 14, 28 and 34 when inserted extend along the entire width of the outer shear band ring 12 in the axial direction 24.

All the other intermediate sections 14, 28 and 34 can be collapsed, inserted and expanded at the same time, or they may be individually collapsed, inserted and expanded one after the other. The features of the intermediate sections 14, 28 and 34 can be arranged so that they are in register with one another, or they may be offset such that features such as spokes of the various intermediate sections 14, 28 and 34 are not aligned with one another in the axial direction 24.

Once the intermediate sections 14, 28 and 34 are positioned within the outer shear band ring 12, the adhesive interface 54 can be treated based upon the particular type of adhesive employed. The adhesive interface 54 can be cured by being treated with temperature, pressure and time sufficient to attain optimal curing as per the type of material used in the adhesive interface 54.

The next step in the assembly process may involve the attachment of the hub 20 to the intermediate section 14. Fig. 8 shows the hub 20 attached to the intermediate section 14. The attachment of the hub 20 may take place after the insertion and attachment of the intermediate sections 14, 28 and 34. The adhesive interface 54 may be cured before the hub 20 is attached, or alternatively the hub 20 may be attached to the end 62 before the adhesive interface 54 is cured.

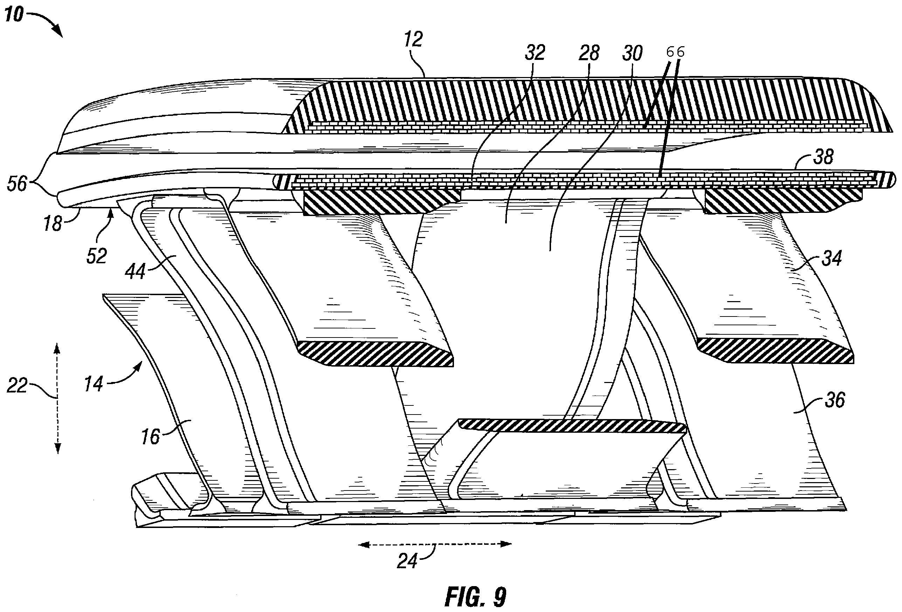

With reference to Fig. 9, the non-pneumatic tire 10 is shown in partial cut away with the intermediate sections 14, 28 and 34 detached from the outer shear band ring 12 in the radial direction 22. The outer shear band ring 12 includes a series of circumferential reinforcements 66, and the various inner shear band rings 18, 32 and 38 likewise include a series of circumferential reinforcements 66. The circumferential reinforcements 66 may be made of fiberglass. The shear band rings 12, 18, 32 and 38 are all part of the shear band 56 and are not portions of the outer V pair spoke sections of the supporting structures 16, 30 and 36. The assembly described herein thus features the shear band 56 being provided as multiple parts that are subsequently assembled with one another into the resulting shear band 56. The inner shear band rings 18, 32 and 38 are not rings that are of the same material as the outer V pair spoke sections 44 of the supporting structures 16, 30 and 36, but are instead actual portions of the completed shear band ring 56.

As shown, the features of the intermediate sections 14, 28 and 34 are out of register from one another in Fig. 9. In this regard, the second intermediate section 28 is rotated relative to the first and third intermediate sections 14 and 34 in the circumferential direction 26 so that the spokes of the second intermediate section 28 are not aligned with the spokes of the first and third intermediate sections 14 and 34. The supporting structures 16 and 36 are in register with one another so that the spokes of the first and third intermediate sections 14 and 34 align in the circumferential direction 26. However, it is to be understood that the non-pneumatic tire 10 can be arranged in other manners so that all of the features of the sections 14, 28 and 34 such as the spoke are all aligned with one another in the circumferential direction 26 so that they are aligned end to end in the axial direction 24 so that from the side the first intermediate section 14 hides all of the features of the second and third intermediate sections 28 and 34 as illustrated for example in Fig. 8.

While the present invention has been described in connection with certain preferred embodiments, it is to be understood that the subject matter encompassed by way of the present invention is not to be limited to those specific embodiments. On the contrary, it is intended for the subject matter of the invention to include all alternatives, modifications and equivalents as can be included within the scope of the following claims.

## Claims

1. A method of forming a non-pneumatic tire (10) comprising the steps of:
providing an outer shear band ring (12);
providing an intermediate section (14, 28, 34) that has a supporting structure (16, 30, 36) and an inner shear band ring (18, 32, 38), wherein the inner shear band ring (18, 32, 38) is located outward from the supporting structure (16, 30, 36) in a radial direction (22) of the tire (10);
providing a hub (20);
positioning the intermediate section (14, 28, 34) inside of the outer shear band ring (12) such that the outer shear band ring (12) is located outward from the intermediate section (14, 28, 34) in a radial direction (22) of the tire (10); and
positioning the hub (20) inside of the intermediate section (14, 28, 34) such that the intermediate section (14, 28, 34) is located outward from the hub (20) in the radial direction (22), wherein the inner shear band ring (18, 32, 38) and the outer shear band ring (12) are part of a shear band ring; and
providing tread (60) attached to the outer shear band ring (12) of the shear band ring (56).

2. The method as set forth in claim 1, wherein the intermediate section (14, 28, 34) is a first intermediate section (14), and wherein the supporting structure (16, 30, 36) is a first supporting structure (16), and wherein the inner shear band ring (18, 32, 38) is a first inner shear band ring (18); and further comprising the steps of:
providing a second intermediate section (28) that has a second supporting structure (30) and a second inner shear hand ring (32);
providing a third intermediate section (34) that has a third supporting structure (36) and a third inner shear band ring (38);
positioning the second intermediate section (28) inside of the outer shear band ring (12) such that the outer shear band ring (12) is located outward from the second intermediate section (28) in the radial direction (22),
wherein the first intermediate section (14) is located next to the second intermediate section (28) in an axial direction (24) of the tire (10); and
positioning the third intermediate section (34) inside of the outer shear band ring (12) such that the outer shear band ring (12) is located outward from the third intermediate section (34) in the radial direction (22),
wherein the second intermediate (28) section is located next to the third intermediate section (34) in the axial direction(24), wherein the second inner shear band ring (32) and the third inner shear band ring (38) are part of the shear band ring (56).

3. The method as set forth in claim 1, wherein the supporting structure (16, 30, 36) has an inner V pair spoke section (40) and an interface ring (42), wherein the interface ring (42) is located outward from the inner V pair spoke section (40) in the radial direction (22), wherein the supporting structure (16, 30, 36) has an outer V pair spoke section (44) located outward from the interface ring (42) in the radial direction (22), wherein the inner shear band ring (18, 32, 38) is located outward from the outer V pair spoke section (44) in the radial direction (22).

4. The method as set forth in any one of claims 1-3, wherein the step of providing the
intermediate section (14, 28, 34) includes placing the inner shear band ring (18, 32, 38) into a mold for the supporting structure (16, 30, 36), wherein the supporting structure (16, 30, 36) is formed by molding the supporting structure (16, 30, 36) to an inner surface (52) of the inner shear band ring (18, 32, 38).

5. The method as set forth in claim 4, wherein the inner surface (52) of the inner shear band ring (18, 32, 38) is prepared for adhesion with the supporting structure (16, 30, 36) before molding of the supporting structure (16, 30, 36) by a preparation that is plasma treatment, chemical treatment, or a rubber formulation with chemistry tailored for adhesion to the supporting structure material.

6. The method as set forth in any one of claims 1-5, wherein the supporting structure (16, 30, 36) is made of a polymeric material.

7. The method as set forth in claim 6, wherein the supporting structure (16, 30, 36) is made of a polymeric material that is selected from the group consisting of polyurethane, copolyester, polyether block amide, and polyolefins.

8. The method as set forth in any one of claims 1-7, wherein the step of positioning the intermediate section (14, 28, 34) inside of the outer shear band ring (12) includes the steps of:
collapsing the supporting structure (16, 30, 36) and the inner shear band ring (18, 32, 38) into a shape that allows for insertion into the outer shear band ring (12); and
adhering the inner shear band ring (18, 32, 38) onto the outer shear band ring (12) through an adhesive interface (54).

9. The method as set forth in any one of claims 1-8, wherein the step of positioning the
hub (20) takes place after the step of positioning the intermediate section (14, 28, 34), wherein the step of positioning the hub (20) includes attaching the hub (20) to the supporting structure (16, 30, 36).

10. The method as set forth in claim 9, wherein the supporting structure (16, 30, 36) has an end that is attached to the hub (20) in order to attach the hub (20) to the supporting structure (16, 30, 36).

11. The method as set forth in claim 3, wherein the step of providing an intermediate
section (14, 28, 34) includes directly attaching the outer V pair spoke section (44) onto the inner shear band ring (18, 32, 38) before the step of positioning the intermediate section (14, 28, 34) inside of the outer shear band ring (12), wherein the direct attachment of the outer V pair spoke section (44) onto the inner shear band ring (18, 32, 38) is performed by injection molding.

12. The method as set forth in any one of the preceding claims, wherein the step of
positioning the intermediate section (14, 28, 34) inside of the outer shear band ring (12) includes forming an adhesive interface (54) between the intermediate section (14, 28, 34) and the outer shear band ring (12) in order to attach the intermediate section (14, 28, 34) to the outer shear band ring (12).

13. The method as set forth in claim 12, wherein the adhesive interface (54) is cushion gum
and wherein the cushion gum is subsequently cured.

14. The method as set forth in any one of the preceding claims, wherein the inner shear
band ring (18, 32, 38) has a plurality of circumferential reinforcements (66), and wherein the outer shear band ring (12) has a plurality of circumferential reinforcements (66).

## Patentansprüche

1. Verfahren zum Herstellen eines nicht-pneumatischen Reifens (10), das die folgenden Schritte umfasst:
Bereitstellen eines äußeren Scherbandrings (12);
Bereitstellen eines Zwischenabschnitts (14, 28, 34), der eine Stützstruktur (16, 30, 36) und einen inneren Scherbandring (18, 32, 38) aufweist, wobei der innere Scherbandring (18, 32, 38) von der Stützstruktur (16, 30, 36) in einer radialen Richtung (22) des Reifens (10) nach außen angeordnet ist;
Bereitstellen einer Nabe (20);
Positionieren des Zwischenabschnitts (14, 28, 34) innerhalb des äußeren Scherbandrings (12), sodass der äußere Scherbandring (12) in einer radialen Richtung (22) des Reifens (10) nach außen vom Zwischenabschnitt (14, 28, 34) angeordnet ist; und
Positionieren der Nabe (20) innerhalb des Zwischenabschnitts (14, 28, 34), sodass der Zwischenabschnitt (14, 28, 34) in der radialen Richtung (22) nach außen von der Nabe (20) angeordnet ist, wobei der innere Scherbandring (18, 32, 38) und der äußere Scherbandring (12) Teil eines Scherbandrings sind; und
Bereitstellen einer Lauffläche (60), die am äußeren Scherbandring (12) des Scherbandrings (56) befestigt ist.

2. Verfahren nach Anspruch 1, wobei der Zwischenabschnitt (14, 28, 34) ein erster Zwischenabschnitt (14) ist, und wobei die Stützstruktur (16, 30, 36) eine erste Stützstruktur (16) ist, und wobei der innere Scherbandring (18, 32, 38) ein erster innerer Scherbandring (18) ist; und ferner umfassend die Schritte:
Bereitstellen eines zweiten Zwischenabschnitts (28), der eine zweite Stützstruktur (30) und einen zweiten inneren Scherbandring (32) aufweist;
Bereitstellen eines dritten Zwischenabschnitts (34), der eine dritte Stützstruktur (36) und einen dritten inneren Scherbandring (38) aufweist;
Positionieren des zweiten Zwischenabschnitts (28) innerhalb des äußeren Scherbandrings (12), sodass der äußere Scherbandring (12) in der radialen Richtung (22) von dem zweiten Zwischenabschnitt (28) nach außen angeordnet ist,
wobei der erste Zwischenabschnitt (14) in einer axialen Richtung (24) des Reifens (10) neben dem zweiten Zwischenabschnitt (28) angeordnet ist; und
Positionieren des dritten Zwischenabschnitts (34) innerhalb des äußeren Scherbandrings (12), sodass der äußere Scherbandring (12) in der radialen Richtung (22) vom dritten Zwischenabschnitt (34) nach außen angeordnet ist,
wobei der zweite Zwischenabschnitt (28) in axialer Richtung (24) neben dem dritten Zwischenabschnitt (34) angeordnet ist, wobei der zweite innere Scherbandring (32) und der dritte innere Scherbandring (38) Teil des Scherbandrings (56) sind.

3. Verfahren nach Anspruch 1, wobei die Tragestruktur (16, 30, 36) einen inneren V-Paar-Speichenabschnitt (40) und einen Schnittstellenring (42) aufweist, wobei der Schnittstellenring (42) in der radialen Richtung (22) vom inneren V-Paar-Speichenabschnitt (40) nach außen angeordnet ist, wobei die Stützstruktur (16, 30, 36) einen äußeren V-Paar-Speichenabschnitt (44) aufweist, der in der radialen Richtung (22) vom Schnittstellenring (42) nach außen angeordnet ist, wobei der innere Scherbandring (18, 32, 38) in der radialen Richtung (22) vom äußeren V-Paar-Speichenabschnitt (44) nach außen angeordnet ist.

4. Verfahren nach einem der Ansprüche 1 bis 3, wobei der Schritt des Bereitstellens des Zwischenabschnitts (14, 28, 34) das Einsetzen des inneren Scherbandrings (18, 32, 38) in eine Form für die Stützstruktur (16, 30, 36) umfasst, wobei die Stützstruktur (16, 30, 36) durch Anformen der Stützstruktur (16, 30, 36) an eine Innenfläche (52) des inneren Scherbandrings (18, 32, 38) gebildet wird.

5. Verfahren nach Anspruch 4, wobei die Innenfläche (52) des inneren Scherbandrings (18, 32, 38) vor dem Formen der Stützstruktur (16, 30, 36) durch eine Plasmabehandlung, eine chemische Behandlung oder eine Gummizusammensetzung mit einer auf die Haftung an dem Material der Stützstruktur (16, 30, 36) zugeschnittenen Chemie für die Haftung an der Stützstruktur vorbereitet wird.

6. Verfahren nach einem der Ansprüche 1-5, wobei die Stützstruktur (16, 30, 36) aus einem Polymermaterial hergestellt ist.

7. Verfahren nach Anspruch 6, wobei die Stützstruktur (16, 30, 36) aus einem Polymermaterial hergestellt ist, das aus der Gruppe ausgewählt wird, die aus Polyurethan, Copolyester, Polyetherblockamid und Polyolefinen besteht.

8. Verfahren nach einem der Ansprüche 1-7, wobei der Schritt des Positionierens des Zwischenabschnitts (14, 28, 34) innerhalb des äußeren Scherbandrings (12) die folgenden Schritte umfasst:
Zusammenklappen der Stützstruktur (16, 30, 36) und des inneren Scherbandrings (18, 32, 38) in eine Form, die ein Einsetzen in den äußeren Scherbandring (12) ermöglicht; und
Festkleben des inneren Scherbandrings (18, 32, 38) am äußeren Scherbandring (12) über eine Klebefläche (54).

9. Verfahren nach einem der Ansprüche 1-8, wobei der Schritt des Positionierens der Nabe (20) nach dem Schritt des Positionierens des Zwischenabschnitts (14, 28, 34) erfolgt, wobei der Schritt des Positionierens der Nabe (20) das Anbringen der Nabe (20) an der Stützstruktur (16, 30, 36) umfasst.

10. Verfahren nach Anspruch 9, wobei die Stützstruktur (16, 30, 36) ein Ende aufweist, das an der Nabe (20) befestigt ist, um die Nabe (20) an der Stützstruktur (16, 30, 36) zu befestigen.

11. Verfahren nach Anspruch 3, wobei der Schritt des Bereitstellens eines Zwischenabschnitts (14, 28, 34) das direkte Anbringen des äußeren V-Paar-Speichenabschnitts (44) am inneren Scherbandring (18, 32, 38) vor dem Schritt des Positionierens des Zwischenabschnitts (14, 28, 34) innerhalb des äußeren Scherbandrings (12) umfasst, wobei das direkte Anbringen des äußeren V-Paar-Speichenabschnitts (44) am inneren Scherbandring (18, 32, 38) durch Spritzgießen ausgeführt wird.

12. Verfahren nach einem der vorhergehenden Ansprüche, wobei der Schritt des Positionierens des Zwischenabschnitts (14, 28, 34) innerhalb des äußeren Scherbandrings (12) das Bilden einer Klebefläche (54) zwischen dem Zwischenabschnitt (14, 28, 34) und dem äußeren Scherbandring (12) umfasst, um den Zwischenabschnitt (14, 28, 34) am äußeren Scherbandring (12) zu befestigen.

13. Verfahren nach Anspruch 12, wobei es sich bei der Klebefläche (54) um eine Kissengummierung handelt und wobei die Kissengummierung anschließend ausgehärtet wird.

14. Verfahren nach einem der vorhergehenden Ansprüche, wobei der innere Scherbandring (18, 32, 38) eine Vielzahl von Umfangsverstärkungen (66) aufweist und wobei der äußere Scherbandring (12) eine Vielzahl von Umfangsverstärkungen (66) aufweist.

## Revendications

1. Procédé de formation d'un pneu non pneumatique (10) comprenant les étapes suivantes :
la fourniture d'un anneau de bande de cisaillement extérieur (12) ;
la fourniture d'une section intermédiaire (14, 28, 34) qui a une structure de support (16, 30, 36) et un anneau de bande de cisaillement intérieur (18, 32, 38), dans lequel l'anneau de bande de cisaillement intérieur (18, 32, 38) est situé vers l'extérieur depuis la structure de support (16, 30, 36) dans une direction radiale (22) du pneu (10) ;
la fourniture d'un moyeu (20) ;
le positionnement de la section intermédiaire (14, 28, 34) à l'intérieur de l'anneau de bande de cisaillement extérieur (12) de sorte que l'anneau de bande de cisaillement extérieur (12) soit situé vers l'extérieur depuis la section intermédiaire (14, 28, 34) dans une direction radiale (22) du pneu (10) ; et
le positionnement du moyeu (20) à l'intérieur de la section intermédiaire (14, 28, 34) de sorte que la section intermédiaire (14, 28, 34) soit située vers l'extérieur depuis le moyeu (20) dans la direction radiale (22), dans lequel l'anneau de bande de cisaillement intérieur (18, 32, 38) et l'anneau de bande de cisaillement extérieur (12) font partie d'un anneau de bande de cisaillement ; et
la fourniture d'une bande de roulement (60) fixée à l'anneau de bande de cisaillement extérieur (12) de l'anneau de bande de cisaillement (56).

2. Procédé selon la revendication 1, dans lequel la section intermédiaire (14, 28, 34) est une première section intermédiaire (14), et dans lequel la structure de support (16, 30, 36) est une première structure de support (16), et dans lequel l'anneau de bande de cisaillement intérieur (18, 32, 38) est un premier anneau de bande de cisaillement intérieur (18) ; et comprenant en outre les étapes suivantes :
la fourniture d'une deuxième section intermédiaire (28) qui a une deuxième structure de support (30) et un deuxième anneau de bande de cisaillement intérieur (32) ;
la fourniture d'une troisième section intermédiaire (34) qui a une troisième structure de support (36) et un troisième anneau de bande de cisaillement intérieur (38) ;
le positionnement de la deuxième section intermédiaire (28) à l'intérieur de l'anneau de bande de cisaillement extérieur (12) de sorte que l'anneau de bande de cisaillement extérieur (12) soit situé vers l'extérieur depuis la deuxième section intermédiaire (28) dans la direction radiale (22),
dans lequel la première section intermédiaire (14) est située à côté de la deuxième section intermédiaire (28) dans une direction axiale (24) du pneu (10) ; et
le positionnement de la troisième section intermédiaire (34) à l'intérieur de l'anneau de bande de cisaillement extérieur (12) de sorte que l'anneau de bande de cisaillement extérieur (12) soit situé vers l'extérieur depuis la troisième section intermédiaire (34) dans la direction radiale (22),
dans lequel la deuxième section intermédiaire (28) est située à côté de la troisième section intermédiaire (34) dans la direction axiale (24), dans lequel le deuxième anneau de bande de cisaillement intérieur (32) et le troisième anneau de bande de cisaillement intérieur (38) font partie de l'anneau de bande de cisaillement (56).

3. Procédé selon la revendication 1, dans lequel la structure de support (16, 30, 36) a une section de rayons en paire en V intérieure (40) et un anneau d'interface (42), dans lequel l'anneau d'interface (42) est situé vers l'extérieur depuis la section de rayons en paire en V intérieure (40) dans la direction radiale (22), dans lequel la structure de support (16, 30, 36) a une section de rayons en paire en V extérieure (44) située vers l'extérieur depuis l'anneau d'interface (42) dans la direction radiale (22), dans lequel l'anneau de bande de cisaillement intérieur (18, 32, 38) est situé vers l'extérieur depuis la section de rayons en paire en V extérieure (44) dans la direction radiale (22).

4. Procédé selon l'une quelconque des revendications 1 à 3, dans lequel l'étape de la fourniture de la section intermédiaire (14, 28, 34) comporte le placement de l'anneau de bande de cisaillement intérieur (18, 32, 38) dans un moule pour la structure de support (16, 30, 36), dans lequel la structure de support (16, 30, 36) est formée par le moulage de la structure de support (16, 30, 36) sur une surface intérieure (52) de l'anneau de bande de cisaillement intérieur (18, 32, 38).

5. Procédé selon la revendication 4, dans lequel la surface intérieure (52) de l'anneau de bande de cisaillement intérieur (18, 32, 38) est préparée pour adhérer à la structure de support (16, 30, 36) avant le moulage de la structure de support (16, 30, 36) par une préparation qui est un traitement au plasma, un traitement chimique, ou une formulation de caoutchouc avec une composition chimique adaptée à l'adhérence au matériau de structure de support.

6. Procédé selon l'une quelconque des revendications 1 à 5, dans lequel la structure de support (16, 30, 36) est constituée d'un matériau polymère.

7. Procédé selon la revendication 6, dans lequel la structure de support (16, 30, 36) est constituée d'un matériau polymère qui est sélectionné dans le groupe se composant de polyuréthane, copolyester, polyéther bloc amide, et polyoléfines.

8. Procédé selon l'une quelconque des revendications 1 à 7, dans lequel l'étape du positionnement de la section intermédiaire (14, 28, 34) à l'intérieur de l'anneau de bande de cisaillement extérieur (12) comporte les étapes suivantes :
l'affaissement de la structure de support (16, 30, 36) et de l'anneau de bande de cisaillement intérieur (18, 32, 38) dans une forme permettant de les insérer dans l'anneau de bande de cisaillement extérieur (12) ; et
l'adhérence de l'anneau de bande de cisaillement intérieur (18, 32, 38) sur l'anneau de bande de cisaillement extérieur (12) par l'intermédiaire d'une interface adhésive (54).

9. Procédé selon l'une quelconque des revendications 1 à 8, dans lequel l'étape du positionnement du moyeu (20) se déroule après l'étape du positionnement de la section intermédiaire (14, 28, 34), dans lequel l'étape du positionnement du moyeu (20) comporte la fixation du moyeu (20) à la structure de support (16, 30, 36).

10. Procédé selon la revendication 9, dans lequel la structure de support (16, 30, 36) a une extrémité qui est fixée au moyeu (20) afin de fixer le moyeu (20) à la structure de support (16, 30, 36).

11. Procédé selon la revendication 3, dans lequel l'étape de la fourniture d'une section intermédiaire (14, 28, 34) comporte la fixation directe de la section de rayons en paire en V extérieure (44) sur l'anneau de bande de cisaillement intérieur (18, 32, 38) avant l'étape du positionnement de la section intermédiaire (14, 28, 34) à l'intérieur de l'anneau de bande de cisaillement extérieur (12), dans lequel la fixation directe de la section de rayons en paire en V extérieure (44) sur l'anneau de bande de cisaillement intérieur (18, 32, 38) est réalisée par moulage par injection.

12. Procédé selon l'une quelconque des revendications précédentes, dans lequel l'étape du positionnement de la section intermédiaire (14, 28, 34) à l'intérieur de l'anneau de bande de cisaillement extérieur (12) comporte la formation d'une interface adhésive (54) entre la section intermédiaire (14, 28, 34) et l'anneau de bande de cisaillement extérieur (12) afin de fixer la section intermédiaire (14, 28, 34) à l'anneau de bande de cisaillement extérieur (12).

13. Procédé selon la revendication 12, dans lequel l'interface adhésive (54) est une gomme de pied et dans lequel la gomme de pied est ensuite durcie.

14. Procédé selon l'une quelconque des revendications précédentes, dans lequel l'anneau de bande de cisaillement intérieur (18, 32, 38) a une pluralité de renforts circonférentiels (66), et dans lequel l'anneau de bande de cisaillement extérieur (12) a une pluralité de renforts circonférentiels (66).
